# EUROPEAN PATENT APPLICATION

(11) **EP 2 955 678 A1**
(43) Date of publication of application: **16.12.2015**
(21) Application number: 15170996.1
(22) Date of filing: 08.06.2015
(51) Int. Cl.: G06Q 30/00

(54) **DYNAMICALLY PROVIDING GUIDANCE DURING CUSTOMER INTERACTIONS**

(30) Priority: 09.06.2014 US 201414300087
(71) Applicant: INTELLISIST Inc., Seattle, WA 98101 (US)
(72) Inventor: MILSTEIN, David, Redmond, WA 98052 (US); LEE, Howard M, Seattle, WA 98109 (US)
(74) Representative: Curley, Donnacha John

(57) **Abstract**

Computer-implemented system and method for dynamically providing guidance during customer interactions are provided. Data associated with a plurality of completed customer interactions is obtained. One or more of the completed customer interactions are identified as successful customer interactions. An ongoing customer interaction is monitored. One or more of the successful customer interactions similar to the ongoing customer interaction are identified. Guidance is generated based on at least one of the similar successful interactions. The guidance is provided to one or more parties to the ongoing customer interaction.

## Description

### TECHNICAL FIELD

This application relates in general to remotely interacting with customers, and, in particular, to a computer-implemented system and method for dynamically providing guidance during customer interactions.

### BACKGROUND ART

In the era of technology, a multitude of ways exist for businesses to interact with their customers, with such interactions ranging from providing to the customers requested information to performing a transaction with the customer. For example, for many businesses, customer call centers, or simply, call centers are the first point of contact when a customer seeks assistance from the businesses. Other businesses, such as online vendors of goods and services, such as companies that sell books online or allow booking a trip online, interact with their customers primarily via the Internet, allowing customers to perform a transaction with the vendor via the vendor's web site or a mobile application connectable to the vendor's server.

Regardless of the medium over which interactions happen, as the interactions get more complicated, a specific progression of actions may be necessary to complete these interactions efficiently. For example, when an agent of a call center addresses a customer's concern about the customer's bill, the agent may have to navigate through multiple screens of an appropriate software application that the agent can use to enter the customer's information, retrieve details about the customer's account, and through which the agent can make appropriate changes to the customer's bill. Similarly, when a customer tries to perform a transaction with an online vendor like ordering a multi-leg trip that includes multiple reservations, such a reservation for a flight, a car rental, and multiple hotel reservations, the customer may have to go through dozens of webpages or mobile application screens into which the customer must enter information and select options for the desired reservations. Unless particular actions are performed in a particular order during these interactions, significant potential for error exists and any errors made can result in increasing the time the interactions take, decreasing the efficiency of the interactions, and causing customer frustration.

One challenge that stands in the way of reducing the potential for error is that problems in an ongoing customer interaction are not conventionally detected or eliminated before these problems cause harm, such as lengthening the time spent on the customer interaction. For example, in a call center environment, a problem is conventionally not detected until an agent of the call center assisting the customer spends more time than necessary on a customer request or until the customer voices his dissatisfaction. At that point, the call center has already lost some profit due to agent inefficiency, or has potentially damaged the relationship with the customer. While the call center may attempt to repair the relationship with the customer by incurring additional expenses, such as providing discounts to the customer, such an approach places a further strain on the resources of the call center.

Similarly, while many online vendors of goods and services have resources to resolve customer problems, customers generally use these resources only when difficulties have already arisen during an interaction. For example many online vendors have a "Help" and a "Frequently Asked Questions" page; such pages would not be generally used by customers before the customers encounter difficulties and need assistance in dealing with these difficulties; at this point, the customers are already frustrated and their satisfaction has decreased. Similarly, many vendors of goods and services have agents available online that can answer customer questions when these question arise; once again, a customer generally turns to these agents after already encountering a problem in interacting with the online vendor.

Therefore, there is a need for a way to efficiently prevent and detect potential problems in a customer interaction before such problem can decrease customer satisfaction and interaction efficiency.

### DISCLOSURE OF THE INVENTION

Customer satisfaction and efficiency of customer interactions can be increased by comparing an ongoing customer interaction to similar interactions that already have been completed and that are known to be successful. Based on the successful interactions of the same type as the ongoing interaction, parties involved in the ongoing interaction can be provided guidance on how to successfully complete the interaction. Other actions can also be taken if the ongoing interaction deviates from a successful interaction progression. As a result, problems during customer interactions can be prevented before they cause customer frustration or slow down the rate at which the interactions are completed. Furthermore, as the number of completed interaction grows, the quality of interactions that are labeled as successful can similarly increase. Thus, the quality of guidance provided to the parties to an interaction and of a determination regarding whether the interaction is successfully progressing continues to dynamically improve along with the quality of completed interactions used for the comparison.

In one embodiment, a computer-implemented method for monitoring a customer interaction progression is provided. Data associated with a plurality of completed customer interactions of different types is obtained. One or more of the completed interactions are identified as successful customer interactions for each of the types are identified. An ongoing customer interaction is monitored. One or more of the successful customer interactions similar to the ongoing customer interaction are identified. Data associated with at least one of the similar successful customer interactions is compared to data obtained from the monitoring. A deviation of the ongoing customer interaction from a successful interaction progression is detected based on the comparison. An action is taken upon detecting the deviation.

In a further embodiment, a computer-implemented method for dynamically providing customer interaction guidance is provided. Data associated with a plurality of completed customer interactions is obtained. One or more of the completed customer interactions are identified as successful customer interactions. An ongoing customer interaction is monitored. One or more of the successful customer interactions similar to the ongoing customer interaction are identified. Guidance is generated based on at least one of the similar successful interactions. The guidance is provided to one or more parties to the ongoing customer interaction.

In a still further embodiment, a computer implemented method for monitoring a customer interaction progression in an automated call center environment is provided. Data about a plurality of completed customer interactions is obtained. An ongoing customer interaction involving a customer and an agent of an automated call center is monitored. One or more of the completed interactions similar to the ongoing customer interactions are identified. The best one of the similar completed interactions is determined. Data collected during the monitoring is compared to the data for the best interaction. A deviation of the ongoing customer interaction from a successful interaction progression to which the ongoing customer interaction belongs is detected based on the comparison. An action is taken upon detecting the deviation.

Still other embodiments of the present invention will become readily apparent to those skilled in the art from the following detailed description, wherein are described embodiments by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### DESCRIPTION OF THE DRAWINGS

FIGURE 1 is a block diagram showing a computer-implemented system for dynamically providing guidance during customer interactions, in accordance with one embodiment.
FIGURE 2 is a flow diagram showing a computer-implemented method for dynamically providing guidance during customer interactions, in accordance with one embodiment.
FIGURE 3 is a flow diagram showing a routine for providing guidance to at least one party to a customer interaction for use in the method of FIGURE 2, in accordance with one embodiment.
FIGURE 4 is a flow diagram showing a routine for detecting a deviation of an ongoing interaction from a successful interaction progression for use in the method of FIGURE 2, in accordance with one embodiment.

### BEST MODE FOR CARRYING OUT THE INVENTION

Efficiency of customer interactions and satisfaction of customers involved in the interactions can be improved by using information about similar interactions that were already completed. By providing real-time guidance based on successful interactions of the same type as an ongoing interaction, parties to the ongoing interaction are allowed to avoid making errors and complete the interaction efficiently and quickly. Furthermore, if the parties make errors and the interaction deviates from a successful interaction progression, the deviation can be detected by comparing the ongoing interaction to the completed interactions of the same type and an action can be taken to the correct the deviation.

While the examples below focus on the use of the described system and method in analyzing interactions involving an automated call center environment and an online vendor of goods and services, the system and method described below can also be used in other scenarios.

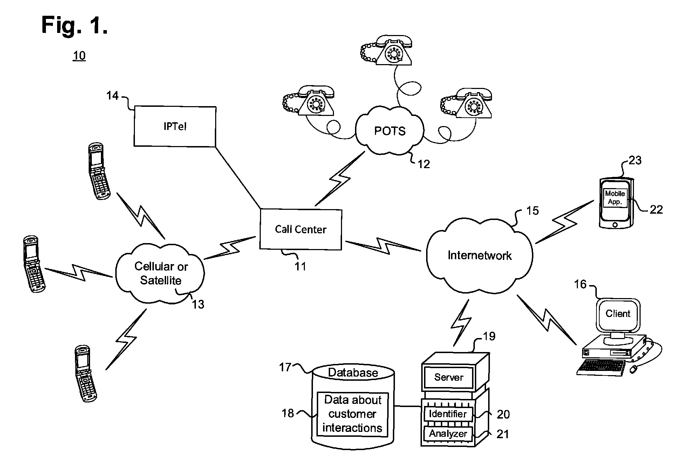

FIGURE 1 is a block diagram showing a computer-implemented system 10 for dynamically providing guidance during customer interactions, in accordance with one embodiment. By way of example, a multiplicity of customers or other users associated with an automated call center 11 can interact with the call center 11 through various ways, such as through voice communication. The ways to use voice communication include Plain Old Telephone Service (POTS) 12, cellular and satellite telephones 13, and Internet telephony (IPTel) 14, including Voice over IP (VoIP) technology that can be implemented through a connection to an Internetwork 15, such as the Internet or a cellular network. Other forms of telephony and voice-based communications can be used, as would be recognized by one skilled in the art. Users can also call to or interface with the automated call center 11 through other data transmission ways such as through the Internetwork 15 using conventional network clients 16. While the client 16 is shown as a desktop computer, other types of devices can be used, including mobile devices such as smartphones and tablets. The data can be transmitted to and from the call center 11 via text messages, emails, or chatrooms. In a further embodiment, the data transmitted can include videos. Other ways for customers to interact with the automated call center 11 are possible.

The automated call center 11 provides a single source of support and problem resolution for customers seeking direct assistance from manufacturers and service vendors, although automated call centers 11 can also be used in other areas of commerce. Although the automated call center 11 is shown as a single point within the system 10, the automated call center 11 could include one or more logically interconnected but physically separate, including geographically connected, operations, which provide a logically unified automated call center 11.

The system 10 further includes a database 17 of stored data 18 about a plurality of customer interactions. A customer interaction can be any contact between a customer and at least one other party providing a good or a service to the customer. Such other party can include either a live individual, such as an agent of the call center 11, or another kind of entity, such as a server. For instance, the other party can be a server of an online vendor of goods or services with which a customer can interact via the vendor's self-service website or a mobile application. Other kinds of parties are possible.

The data 18 about the interactions can include information about the progression of actions taken by one or more of the parties to the interactions during these interactions. The actions can include visiting particular pages such as webpages or application screens, giving particular commands, selecting particular options or fields on the pages, and entering particular information or kinds of information into the fields. For example, such actions can include controlling via a user interface of an agent application executed on an agent console (not shown) an execution of one or more scripts, as further described in U.S. Patent No. 8,170,197, issued on May 1, 2012, the disclosure of which is incorporated by reference. Similarly, regardless of whether the agent is interacting with the customer through a script or directly, such as via text, audio, or video, the agent may need to take actions via other agent applications, stored in the database 17 and executed on the console, that include multiple screens through which the agent can enter information provided by the customer, pull up information related to the customer, and address the customer's concerns, such as making changes to the customer's account. Similarly, actions by the agent can include particular statements, or other forms of verbal or nonverbal communication, made by the agent to the customer during the interaction. Other kinds of actions are possible.

Similarly, when the customer orders goods or services from an online vendor, the customer has to take actions such as navigating through a series of webpages that are the part of the vendor's website or screens of a user interface of the vendor's mobile application, clicking one or more buttons or links, and entering information such as customer's address, billing information, and information about the product or service being ordered into one or more fields.

In one embodiment, the data 18 regarding the actions includes metadata. The metadata describes actions taken via one or more computer-executable applications, such as an agent application, a mobile application, or a web-browser. For example, metadata can include a description of pages, such as application screens or webpages, that one or more parties to an interaction navigated through, the fields entered the parties entered information into, the information the parties have entered into the pages or screens, and any commands that the parties gave, such as any buttons or links that the party clicked on or commands controlling an execution of a script. The metadata further includes the sequence in which the at least one party to the interaction progressed through these actions, such as the order in which the party visited through the pages, entered data into the fields, and gave commands. For example, if the interaction involves the call center 11, the metadata can include screens and fields that an agent went through during the interaction, what the agent typed into the fields, any commands that the agent gave in controlling an execution of a script, as well as the order in which these actions were taken. The metadata can further include a record of statements made by the agent to the customer via the agent application. Similarly, if the interaction is a purchase of goods or services from an online vendor through a website or a mobile application, the metadata can include pages that the customer went through, the links the customer clicked on, commands the customer gave, the information the customer entered as well as the order of these actions. Other kinds of metadata are possible.

The data 18 can further include other kinds of information. For example, if the call center 11 includes sensors, such as video cameras and audio sensors, that monitor agents during the interactions, such as through the agent's console, the data gathered by the sensors during the interactions can be stored in the database 17. Such data can describe the movements and speech of the agents during the interactions.

The data 18 further includes one or more attributes of each of the interactions. The attributes are characteristics of the interactions. For instance, the attributes can include a score given to an interaction by the customer who participated in that interaction, a score given to the interaction by a third party, either human or a machine, that evaluated the interaction for purposes such as quality control, a time that the interaction took, whether the interaction resulted in a sale of the goods or a service or other revenue, and a score based on whether the customer's concerns were resolved in that particular interaction or whether follow-up interactions where required to address concerns ("first call resolution score"). Other attributes are possible. Still other kind of data 18 can be stored in the database 17.

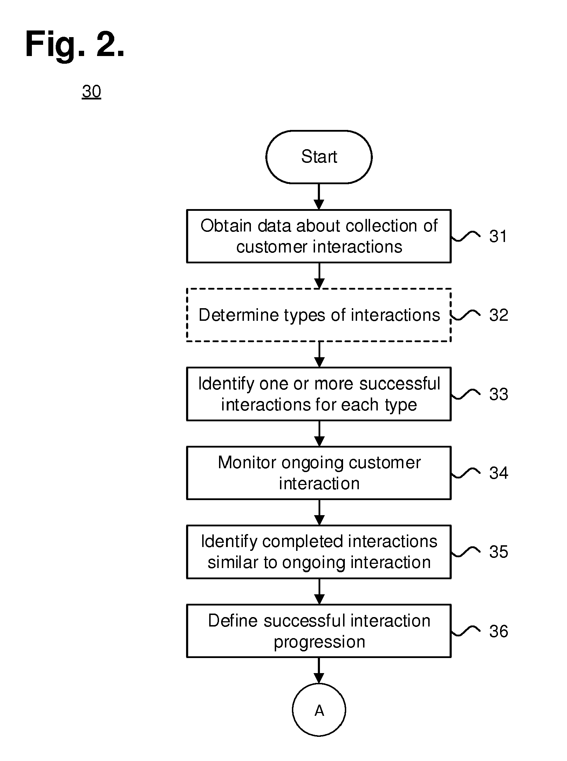

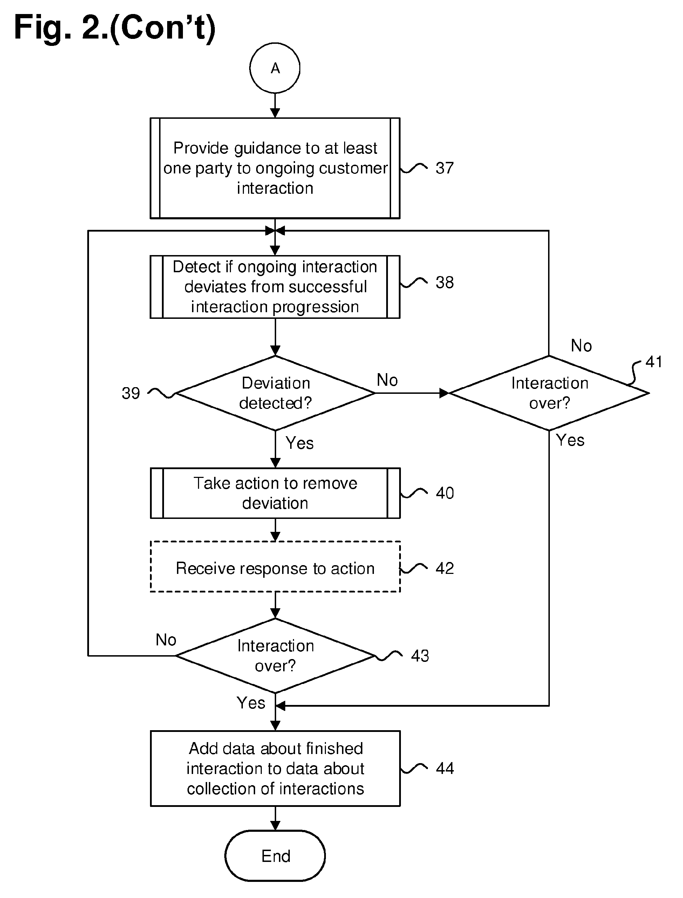

The interactions about which data 18 is stored in the database can be of various types and the data 18 includes information about the parties involved and other interaction information that can be used to determine the types. Each of the types can be defined by one or more factors. Interactions of the same type are similar to each other, and share the factors that define the type. Such factors can include the medium through which an interaction occurred, such as phone, chat, or another communication medium; an initiating party of an interaction, such as whether the interaction was initiated by a customer, as can be the case in an incoming call to the call center 11, or a by another party to the interaction, such as an outgoing call from the call center 11; whether the interaction involved an agent with particular skills; and a business reason for an interaction, such as to sell a customer a product or a service or to answer a customer's question. Other factors are possible. For instance, a type of the interaction can be determined based on information from the customer's profile, such as the customer's location, the kind of subscription service the customer has, and previous interactions that the customer had with the call center 11. Similarly, the factors can include other customer or agent traits, as further described in commonly-owned U.S. Patent Application Publication No. 20130016815, published January 17, 2013, the disclosure of which is incorporated by reference. Thus, for example, an interaction type defined based on four factors can be a phone call to the call center 11 initiated by the customer with a British accent who is trying to obtain answers to questions about the customer's bill. Similarly, an interaction type defined based on five factors can be a gold membership customer from Seattle, Washington, initiating an interaction with an online trip reservation service via the service's website to book a trip. Other ways to define the types of interactions are possible. The database 17 is connected to at least one server 19, which executes an identifier of a successful customer interactions 20 that determines a type for each of the interactions whose data 18 is stored in the database 17 and identifies one or more successful interactions for each of the types, as further described below beginning with reference to FIGURE 2. In one embodiment, the identifier 20 identifies the best interaction for each of the types of interactions present in the database 17 by calculating a score for each interaction and comparing the scores for the interactions of the same type, as further described *infra.* In a further embodiment, the identifier 20 identifies a plurality of successful interactions as further described *infra* with reference to FIGURE 2. The identified successful interactions can be stored in the database 17.

The identifier 20 further defines a successful interaction progression for the types of interactions. In one embodiment, a successful interaction progression for a type of interactions is a sequence of particular actions that were performed during one or more successful interactions for the same type by one or more parties to those successful interactions. For example, the sequence of actions taken during the best interaction can be set as the successful interaction progression. Thus, if a best interaction for handling a customer billing inquiry involves an agent of the call center 11 visiting a screen for entry of customer information, entering customer name and account number into appropriate fields, clicking an entry button, and then clicking on a link for a recent bill on a page with customer account information presented in response to the click of the entry button, this sequence of actions can be set as the successful interaction progression.

Similarly, if multiple successful interactions are identified, a sequence of actions present in a percentage of the successful interactions that satisfies a predefined threshold can be set as the successful interaction progression. For example, if 80% of customers trying to book a trip online first went to a webpage for booking a flight and then went to a page allowing to book a car rental at the time of their flight's arrival, the sequence of the actions can be set as the successful interaction progression. In a further embodiment, if different sequences of actions were taken during the successful interactions, the successful interaction progression can be set to include all of the sequences; thus, if a party to an ongoing interaction follows either of the sequences, the interaction does not deviate from the successful interaction progression. Other ways to define the successful interaction progression are possible.

In a further embodiment, a successful interaction progression can further be defined based on or one more parameters, which can be determined based on the one or more successful interactions or in other ways. To follow the successful interaction progression, actions during an ongoing interaction have to be taken within the parameters. For example, the parameters can include a limit on an amount of time that passes between actions being taken, such as a time that a party to the interaction spends at a page without navigating to another page. For example, if the agent of the call center 11 spends more than a predetermined amount of time with a single screen being displayed indicates that the agent is lost and can be a sign of the deviation based on which the analyzer 21 can detect the deviation. Similarly, if a customer of an online vendor spends more than a predetermined amount of time on a single webpage of the vendor's website or on a single screen of the vendor's mobile application, the analyzer 21 can detect the deviation. In one embodiment, the time limit can be based on the time the parties in the one or more successful interactions spent between taking particular actions. In a further embodiment, the time limit can be independent of the successful interactions.

Another parameter based on which the successful interaction progression can be defined is whether at least one of the parties to the interaction goes back and forth between two or more particular webpages or application screens more than a certain number of times. In one embodiment, if the interactions based on which the successful interaction progression is defined did not include the parties going back and forth between pages or included only a certain number of times of going between the pages, switching between the pages more times than during the successful interactions can be a sign based in which the deviation can be detected. In a further embodiment, the number of times can be set independently of the successful interaction, such as based on user input. Thus, for example, if the agent of the call center 11 switches between the page including the customer's profile information and the customer's billing information, the agent may be confused and the switching can be considered a sign of the deviation. Other parameters based on which the successful interaction progression can be defined are possible.

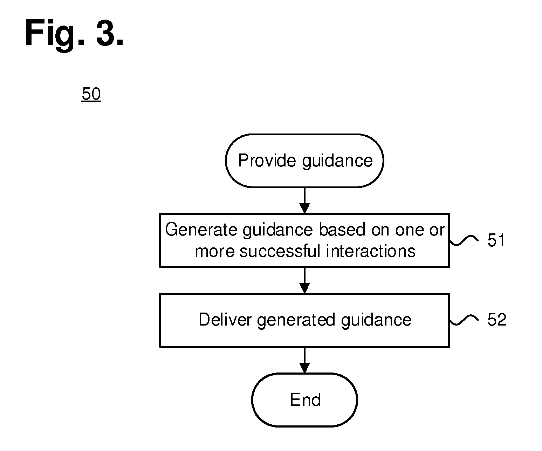

The server 19 further executes an ongoing interaction analyzer 21 that monitors an ongoing interaction and determines the type to which the ongoing interaction belongs. By determining the type to which the ongoing interaction belongs, the server 19 can find one or more completed successful interactions that are similar to the ongoing interactions, successful interactions of the same type. Upon determining the type, the analyzer 11 can provide to at least one of the parties in the interaction guidance, such as hints and suggestions for actions to be taken, based on one or more of successful interactions for the type which define the successful interaction progression, as further described below with reference to FIGURES 2 and 3. The analyzer 21 also detects when the ongoing interaction deviates from a successful interaction progression for the type of the interactions with which the ongoing customer interaction is associated, as further described below beginning with reference to FIGURE 2.

Upon detecting the deviation, the analyzer 21 can take an action to address the deviation. Such an action can include providing guidance to one or more parties, notifying one or more parties to the ongoing interaction of the deviation, notifying other parties to the call center, and changing one of the parties to the interaction. For example, in the case of the call center 11, the actions can include notifying the agent of the deviation, providing guidance to the agent based on the successful interactions, as further described below beginning with reference to FIGURE 2, notifying the agent's supervisor, notifying the customer in the ongoing call, and transferring the customer to a different agent. Similarly, when a customer interacts with a website or a mobile application, the actions can include providing guidance to the customer, notifying the customer of the deviation, and notifying a representative of the vendor that the deviation has been detected in regards to the particular interaction. Other actions are possible.

The analyzer 21 can further receive a response from a third party notified of the action. For example, if a supervisor of a call center agent is notified of the deviation, the supervisor can send from his console (not shown) a screen to which the agent can go to deal with the deviation. The screen can be displayed on the console of the agent. Other data can also be received and displayed to one or more of the parties in the interaction.

The server 19 is connected to the Internetwork 15 and through the Internetwork 15 can interact with the call center 11. For example, the server 19 can analyze an ongoing call center interaction. The server 19 can also interact with one or more mobile applications 22 executed on one or more user devices 23. While the user device 23 is shown as a smartphone in FIGURE 1, the user devices 23 can include devices such as tablets, laptops computers, portable media players, other types of mobile phones, desktop computers, and other computing devices capable of using downloadable applications. In a further embodiment, the server 19 can be a part of the call center 11 and be connected to the Internetwork 15 through the call center 11. In a still further embodiment, the system 10 can include the database 17 and the server 19 connected through the Internetwork 15 to one or more clients 16 or user devices 23 executing the mobile applications, with no call center 11 being a part of the system 10. For example, in such a scenario, the server may maintain a website of an online vendor of goods or services that allows a customer to order the goods and services; the server 19 can also allow the customer to order the goods and services via the mobile application 22 with which the server 19 interacts. In such a scenario, the call center 11 may not be necessary as the customer interacts directly with the server 19.

The at least one server 19 can include components conventionally found in general purpose programmable computing devices, such as a central processing unit, memory, input/output ports, network interfaces, and non-volatile storage, although other components are possible. The central processing unit can implement computer-executable code, which can be implemented as modules. The modules can be implemented as a computer program or procedure written as source code in a conventional programming language and presented for execution by the central processing unit as object or byte code. Alternatively, the modules could also be implemented in hardware, either as integrated circuitry or burned into read-only memory components. The various implementations of the source code and object and byte codes can be held on a computer-readable storage medium, such as a floppy disk, hard drive, digital video disk (DVD), random access memory (RAM), read-only memory (ROM) and similar storage mediums. Other types of modules and module functions are possible, as well as other physical hardware components. The at least one server 19 can be in a cloud-computing environment or be a dedicated server.

Guiding an ongoing customer interaction based on other interactions of the same type allows to prevent problems from occurring during the interaction, increase customer satisfaction, and interaction efficiency. FIGURE 2 is a flow diagram showing a computer-implemented method 30 for dynamically providing guidance during customer interactions, in accordance with one embodiment. The method 30 can be implemented using the system described in FIGURE 1. Initially, data regarding a collection of customer interactions 19 of different types is obtained (step 31). The data can be obtained from one or more sources. For example, interactions that have previously taken place using the same system as the method 30 is implemented on can be stored in a database and retrieved by the server during step 31. In a further embodiment, the interactions could have taken place at a different setting, such as at a different call center, and the data regarding the interactions is stored in the database prior to a start of the method 30. Other ways to obtain the data are possible.

Optionally, if not previously available for all of the interactions whose data is stored, a type of each of the interactions whose data is stored in the database is determined (step 32). The type for each of the interactions can be determined by analyzing the factors based on which the types are defined. For example, if a type of an interaction is defined by the medium of the interaction, the initiating party, and the business reason for the interaction, the medium, the initiating party, and the reason are determined for each of the interactions. Based on the determination, the interactions are assigned into each of the types. The interactions in each of the types are similar to each other, sharing all of the factors that define the type.

One or more successful interactions are identified for each of the types based on the obtained data (step 33). In one embodiment, successful interactions can be identified based on a formula that takes into account attributes associated with each of the interactions. For example, if the attributes include scores for various characteristics of the interactions, the scores may be weighed and summed to get an overall score for the interactions. These attributes may be weighed differently in the formula depending on the type of the interaction involved. For instance, if an interaction is a billing call from the call center, the server may use a formula that calculates a score for each interaction by placing 20% of weight on the customers satisfaction score, 30% of the weight on the score given during a third party evaluation of the interaction, 20% of the weight on the first call resolution score for the interaction, and 30% of the weight on revenue associated with the interaction. On the other hand, if an interaction is regarding technical support for a computer problem the customer experiences, the formula may place 40% of the weight on the customer satisfaction score, 30% of the weight of the score given during a third party evaluation of the interaction, 25% of the weight of the first call resolution score for the interaction, and 5% of the weight on the revenue brought in by the interaction. The formulas recited above are for illustrative purposes only, and other formulas for calculation of the score can be used.

Based on the scores calculated for the interactions, one or more successful interaction can be selected for each type of interactions. In one embodiment, only one successful interaction is selected: the best interaction for each type, which is the interaction with the highest score. The best interaction can be identified by comparing the scores for interactions of the same type, and choosing the interaction with the highest score. In a further embodiment, the scores for the interactions can be compared to a predefined threshold and interactions whose score satisfies the threshold can be identified as successful. Alternatively, a certain number of interactions with the highest scores can be identified as the successful interactions.

In a still further embodiment, interactions can be identified as successful based on a binary attribute. For example, if an interaction has resulted in a purchase of a good or a service, that interaction can be identified as a successful interaction.

In a still further embodiment, the above techniques can be used to identify interactions that are the worst for their respective types; thus, if an interaction with the highest score is identified as the best interaction, the interaction with the lowest score can be identified as the worst interaction for the type. The worst and the best interactions can be used for training purposes, such as training new agents of the call center. Other ways of scoring and identifying the best and the worst interactions are possible.

In one embodiment, step 33 is a repeated every time the method 30 is performed. In a further embodiment, step 33 can be repeated after a predefined period of time has passed, such as once a day, and the runs of the method 30 performed that day can use the successful interactions identified for that day. In a still further embodiment, the identification of the successful interaction can take place at a different point of the method 30. For example, after one or more completed interactions similar to an ongoing interaction are identified in step 35 below, the successful interactions can be identified among the similar interactions.

Upon beginning of a new customer interaction, the ongoing customer interaction is monitored by the server (step 34). The monitoring can involve collecting metadata about the ongoing interaction. Similarly, the monitoring can include collecting video or audio data about the parties involved in the interaction; for example, sensors in a console of an agent of the call center can monitor the agent and gather video and audio data about that agent during the interaction. Other types of monitoring are possible. Furthermore, multiple types of monitoring can be combined and data of multiple types can be collected during the monitoring. The monitoring continues until the interaction is over, completed, which can be occur when the parties to the interaction lose contact with each other, such as a customer hanging up on the phone call with a call center or leaving the website or closing a mobile application through which the interaction was happening.

Completed interactions that are similar to the ongoing customer interaction are determined by identifying the type to which the ongoing customer interaction belongs, in the same way as described above with reference to step 32, and identifying completed interactions of the same type as similar to the ongoing customer interaction; likewise, if successful interactions of that type have already been determined, in step 33, these successful interactions are identified as successful interactions similar to the ongoing customer interaction (step 35). In determining the type of the interaction, the server can rely on information provided by the customer as well as the information stored by the system, such as in the profile of the customer. For example, if a customer contacts the call center, at the beginning of the interaction, the call center can automatically inquire about the reason of the customer's call; such information provided by the customer can be used by the server to identify the type of call. Other ways to determine the type of an ongoing interaction are possible. For example, information in the customer's profile can be used to determine a kind of a subscription the customer has, which can be used during the determination of the type of the interaction. Still other ways to determine the type of the monitored ongoing customer interaction are possible.

A successful progression of interactions is defined for the type of the interaction to which the ongoing customer interactions belongs based on one or more of the successful interaction for that type, which are completed interactions similar to the ongoing customer interaction (step 36). If only the best interaction for the type is identified in step 33, the sequence of actions taken during the best interaction can be set as the successful interaction progression. If multiple successful interactions have been identified for the type, sequences of actions taken during one or more of these successful interactions can be set as the successful interaction progression, as described above with reference to FIGURE 1. Optionally, parameters within which actions during a successful interaction progression have to be performed are also set, either automatically, such as based on the successful interactions, or based on user input. As described above with a reference to FIGURE 1, such parameters can include a time limit on the actions to be taken and a limit on the number of times a party can go back and forth between pages, though other parameters are also possible. Deviation from the parameters can be used as a sign of a deviation from the successful interaction progression.

In a further embodiment, the successful interaction progression can be defined at a different point of the method 30. For example, after successful interactions have been identified for each of the types (step 33), a successful interaction progression can also be identified for each of the types.

Upon determining the type of the interaction, one or more of the parties to the interaction can be provided guidance regarding how to successfully complete the interaction based on the successful interaction progression for that type, as further described below with the reference to the FIGURE 3 (step 37). In a further embodiment, guidance can be provided at a different point of the method 30; for example, in the further embodiment, guidance can only be provided upon the detection of the deviation from the successful interaction progression per step 39 below.

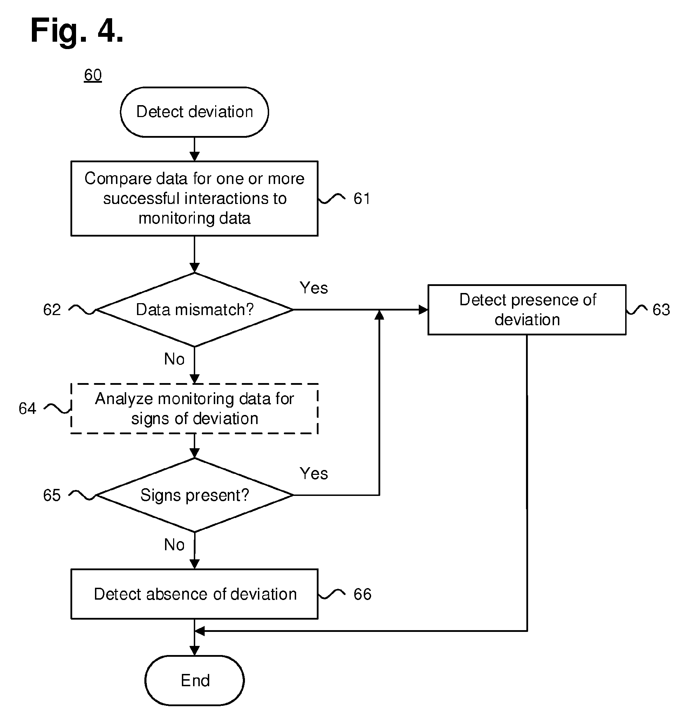

Furthermore, the server can detect when the monitored customer interaction deviates from the successful interaction progression, as further described in the reference to FIGURE 4 (step 38). The detection can be performed either continually, where new data from the monitoring is analyzed as soon as the new data becomes available for the analysis, or periodically, with data collected during a period of time, such as ten seconds, is analyzed upon a completion of that period.

If deviation is detected (step 39), the server takes one or more actions that affect the deviation (step 40). Such actions can include providing guidance to the parties, as further described below with reference to FIGURE 3. Similarly, one or more parties to the interactions can be notified of the deviation. For example, in the call center scenario, text may appear on the console of the agent involved in the interaction notifying the agent that the agent has deviated from the successful progression for this interaction type. In a further embodiment, the deviation can be shown through the use of different colors on a display of the agent's console. For example, an indicator of whether the interaction remains on the successful interaction progression can be displayed on the agent's screen. When the interaction is on a successful interaction progression, the indicator can be shown green; however, when the deviation from the successful interaction progression is detected, the indicator can be shown in color red. Other color schemes are possible. Likewise, when the customer is interacting with online vendor of goods and services, a message can appear on the customer's web browser or in the mobile application notifying that customer has deviated from the successful progression for the transaction that the customer is trying to perform, such as buying a book or ordering a trip. Similarly, in a call center environment, the customer can be notified that the agent has deviated from the successful interaction progression and that the customer should ask the agent questions to double check that the agent is on the right track. The notification can be provided to the parties in the same window through which the interaction is performed, or in a different window, such as a pop-up window.

Other actions can include notifying a third party of the deviation. For example, a supervisor of the agent involved in the monitored interaction can be notified of the deviation. In addition, one of the parties to the interaction can be substituted. For example, if one agent of the call center has deviated from the successful progression in the interaction, the server can transfer the customer in the interaction to a different agent. Other actions are possible.

If no deviation is detected (step 39), the server inquires whether the interaction has been completed (step 41). If the interaction has not been completed (step 41), the method returns to the step 38 described above. If the interaction has been completed, the method 30 goes to step 44 described below.

Optionally, the server can receive a response to an action that was taken in step 39 (step 42). For example, if the server notifies the supervisor of the agent, the server can receive from the supervisor a screen shot of screen that the agent should go to correct the deviation. The server can provide the screen shot to the agent. Other kinds of responses to the action can be received by the server.

Upon taking the action (step 40), and, optionally, receiving the responses to the action (step 42), the server determines whether the interaction has been completed (step 43). If the interaction is not over (step 43), the method 30 returns to step 38. If the interaction is over (step 43), data about the completed interaction is added to the data about the collection of completed interactions (step 44), and can be used during the subsequent runs of the method 30, ending the method 30. In addition to data obtained from the monitoring, data about the completed interaction can further include additional attributes of the interaction, which can be received from various sources, such as the customer who participated in the interaction and evaluated the interaction upon the completion, a third party who evaluated the interaction, the customer's profile, and other sources. Thus, the interactions that are considered successful for each of the types of the interactions can be dynamically redefined as data about more interactions becomes available. As the quality of the interactions considered successful continues to improve due to the addition of more interactions, the guidance provided to the parties can similarly dynamically improve, further increasing customer satisfaction and interaction efficiency.

Providing guidance to a party to an ongoing customer interaction helps to prevent the party from taking the interaction into a wrong direction. FIGURE 3 is a flow diagram showing a routine 50 for providing guidance to at least one party to a customer interaction for use in the method 30 of FIGURE 2, in accordance with one embodiment. The guidance is generated based on actions taken during the one or more successful interactions which define the successful interaction progression for the interaction type (step 51). In one embodiment, multiple segments of guidance, such as hints and suggestions for actions to be taken, can be generated for a single interaction. For example, if the interaction involves an agent going through multiple screens of the agent application, guidance can be generated to be presented on each of the screens, with the guidance letting the agent know what the agent in the one or more successful interactions did on that particular screen, what fields the agent selected, and what kind of information the agent entered into the fields. In a further embodiment, a single segment of guidance can be generated for the entire interaction. For example, the guidance can include a description of actions taken during the entire length of the one or more successful interactions. In a still further embodiment, a single segment of the guidance can be generated for a particular part of the interaction. For example, if there is a particular webpage where most customers get lost, one or more segments of guidance can be generated only for that page.

The generated guidance can be delivered to the one or more of the parties to the ongoing interaction in one or more ways (step 52). For example, once the type of the ongoing interaction is identified, in the scenario involving the online vendor of goods and services, segments of guidance including text messages can be displayed to the customer trying to perform a transaction with the vendor as part of the customer's web-browser application. Such messages can include that the customer appears to be attempting to perform a particular transaction and that other customers have successfully performed a transaction by taking particular actions, such as clicking a particular link on the web page the customer is currently at. The actions can be visually illustrated for the customer; for example, if the steps involve clicking on a particular link on a web page, the link can be highlighted on the customer's screen, such as through a use of an arrow pointing at the link or being shown in a different color. The guidance can also be provided in a pop-up webpage or screen separate from the webpage or screen via which the customer is performing actions.

Guidance can be provided to an agent of the call center in a similar fashion once the type of interaction is identified, such as on one of the screens of the agent application or through the application. In a further embodiment, the guidance can be provided in other ways. For example, the guidance can also be provided to the parties verbally, such as through the customers web-browser or through the agent's call center console. Still other ways to provide the generated guidance to parties in the interaction are possible.

Guidance can be presented to the parties either throughout the interaction or at a single point of the interaction. If a segment of guidance is generated for every page that a customers to navigate to during the interaction, each of the segments can be presented when the customer reaches an appropriate screen. If only a single segment of guidance is generated, the guidance can be presented either at the beginning of the interaction, such as if the guidance includes hints and suggestions for the entirety of the interaction, or at the point of the interaction, such as a particular webpage or screen, for which the guidance was generated. Other times the press and the guidance are possible.

In addition to providing guidance, detecting if the interaction has deviated from the successful interaction progression and taking action to correct the deviation can further increase the efficiency of the transaction. FIGURE 4 is a flow diagram showing a routine 60 for detecting a deviation of an interaction from a successful progression for use in the method 30 of FIGURE 2, in accordance with one embodiment. The data for the one or more successful interactions based on which the successful interaction progression for the interaction type was defined is compared to the data gathered during the monitoring of the ongoing interaction (step 61). If there is a mismatch (step 62), such as a party during an interaction going to a webpage or a screen that was not visited during the one or more successful interactions, the presence of the deviation is detected (step 63), ending the routine 60. If there is no data mismatch (step 62), the monitoring data is optionally analyzed for other signs of the deviation being present, such as a deviation from the parameters, if any were defined, for the successful interaction progression (step 64). Such signs can include a party to the interaction spending more than a previously defined amount of time on a particular webpage or screen, or the party going back and forth between the same webpages or screens more than the predefined amount of times, though other signs are possible. If the analysis shows that the signs are present (step 65), the routine 60 goes back to step 63 and detects presence of the deviation, ending the method. If no signs of the deviation are present (step 65) in absence of the deviation is detected (step 66), ending the routine 60.

While the invention has been particularly shown and described as referenced to the embodiments thereof, those skilled in the art will understand that the foregoing and other changes in form and detail may be made therein without departing from the spirit and scope of the invention.

## Claims

1. A computer-implemented method (30) for monitoring a customer interaction progression, comprising the steps of:
obtaining (31) data (18) associated with a plurality of completed customer interactions;
identifying (33) one or more of the completed interactions as successful customer interactions;
monitoring (34) an ongoing customer interaction;
identifying (35) one or more of the successful interactions similar to the ongoing customer interaction;
comparing (61) the data associated with at least one of the similar successful customer interactions to data (18) obtained from the monitoring;
detecting (38, 63) a deviation of the ongoing customer interaction from a successful interaction progression based on the comparison; and
taking (40) an action upon detecting (38, 63) the deviation,
wherein the steps are performed by a suitably programmed computer.

2. A method (30) according to Claim 1, further comprising the steps of:
generating (51) guidance based on the at least one successful interaction; and
providing (37, 52) the guidance to one or more parties to the ongoing customer interaction upon identifying (35) that the ongoing customer interaction is similar to the at least one successful customer interaction.

3. A method (30) according to Claim 1, wherein the action comprises one or more of notifying one or more parties to the interaction of the deviation, notifying a third party of the deviation, substituting one of the parties to the ongoing customer interaction, and providing guidance to one or more parties to the interaction.

4. A method (30) according to Claim 3, further comprising the steps of:
receiving (42) a response to the notification from the third party; and
providing the response to one of the parties involved in the ongoing customer interaction.

5. A method (30) according to Claim 1, further comprising the steps of:
defining (36) the successful interaction progression based on at least one of the data associated with the at least one successful and one or more parameters.

6. A method (30) according to Claim 5, further comprising the steps of:
identifying (65) signs of the deviation in the monitored data comprising a deviation from one or more of the parameters,
wherein the deviation is further identified (38, 63) based on the signs.

7. A method (30) according to Claim 6, wherein the ongoing customer interaction comprises at least one of the parties to the interaction going through a plurality of pages, each page comprising one of a webpage and an application screen, and the signs comprise at the least one of the parties spending more than a predefined amount of time at one or more of the pages and switching between two of the pages more than a predefined number of times.

8. A method (30) according to Claim 1, wherein the successful interactions are identified based on one or more attributes comprised in the data (18) associated with the interactions in the plurality, the attributes comprising one or more of a customer evaluation of each of the interactions, a third party evaluation of each of the interactions, a first call resolution score of each of the interactions, a revenue associated with each of the interactions, and whether the interactions resulted in a transaction with the customer.

9. A method (30) according to Claim 1, wherein the ongoing customer interaction is between and agent of a call center (11) and a customer of the call center (11), and the action comprises one or more of notifying one or more of the agent and the customer of the deviation, notifying the agent's supervisor of the deviation, transferring the customer to a different agent, and providing guidance to the agent.

10. A computer-implemented system (10) for dynamically providing customer interaction guidance, comprising:
at least one processor configured to execute code, comprising:
a data module configured to obtain data (18) associated with a plurality of completed customer interactions;
an identifying module (20) to identify (33) one or more of the completed customer interactions as successful customer interactions;
a monitoring module (21) configured to monitor (34) an ongoing customer interaction;
a similarity module (21) configured to identify (35) successful interactions similar to the ongoing customer interaction;
a generation module (21) configured to generate (51) guidance based on the data associated with at least one of the similar successful interactions ; and
a guidance module (21) configured to provide (37, 52) the guidance to one or more parties to the ongoing customer interaction.

11. A system (10) according to Claim 10, wherein the ongoing customer interaction comprises at least one of the parties to the interaction going through a plurality of pages, each page comprising one of a webpage and an application screen, further comprising at least one of:
a page module configured to display the guidance on one of the displayed pages; and
a screen module configured to display the guidance in a separate screen from the displayed screen.

12. A system (10) according to Claim 10, further comprising:
a comparison module configured to compare (61) the data regarding the at least one similar successful customer interaction to data (18) obtained from the monitoring;
a deviation module (21) configured to identify (63) a deviation of the ongoing customer interaction from a successful interaction progression based on the comparison; and
an action module (21) configured to take an action (40) upon identifying (63) the deviation.

13. A system (10) according to Claim 12, wherein the ongoing customer interaction comprises at least one of the parties to the interaction going through a plurality of pages, each page comprising one of a webpage and an application screen, further comprising the steps of:
an identification module configured to identify (64) one or more signs of the deviation in the monitored data, the signs comprising at the least one of the parties spending more than a predefined amount of time at one or more of the webpages and screens and switching between two or more than a predefined number of times; and
a detection module configured to detect (38, 63) the deviation based on the identified signs.

14. A system (10) according to Claim 12, wherein the action comprises one or more of notifying one or more parties to the interaction of the deviation, notifying a third party of the deviation, substituting one of the parties to the ongoing interaction, providing additional guidance to one or more parties to the interaction.

15. A system (10) according to Claim 12, wherein the ongoing customer interaction comprises a call between a customer of a call center (11) and an agent of the call center (11).
